Europäisches Patentamt

European Patent Office

Office européen des brevets

(11) Publication number: **0 473 854 A1**

## EUROPEAN PATENT APPLICATION

(21) Application number: **90309790.5**

(22) Date of filing: **07.09.90**

(51) Int. Cl.5: **A23D 7/00**

(43) Date of publication of application:
**11.03.92 Bulletin 92/11**

(84) Designated Contracting States:
**AT BE CH DE DK ES FR GB GR IT LI LU NL SE**

(71) Applicant: **UNILEVER PLC**
**Unilever House Blackfriars P.O. Box 68**
**London EC4P 4BO(GB)**

(72) Inventor: **Norton, Ian Timothy Unilever Res.**
**Colworth Lab.**
**Colworth House, Sharnbrook**
**Bedford MK44 1LO(GB)**

(74) Representative: **Tan, Bian An, Ir. et al**
**Unilever N.V. Patent Division P.O. Box 137**
**NL-3130 AC Vlaardingen(NL)**

(54) **Water-in-oil dispersion.**

(57) The present invention is concerned with a plastic dispersion containing from 5-65 wt.% of a continuous fat phase and from 95-35 wt.% of a gelling polysaccharide containing dispersed aqueous phase, wherein the aqueous phase comprises one or more gelling polysaccharides at a concentration exceeding the critical concentration thereof, from 0.004 to 1.0 wt.% of protein and a viscosity enhancer.

We have found that the present dispersions display essentially the same in-mouth break down behaviour as gelatin-gelled dispersions.

EP 0 473 854 A1

The present invention relates to a plastic dispersion containing from 5-65 wt.% of a continuous fat phase and from 95-35 wt.% of a gelling polysaccharide containing dispersed aqueous phase.

Dispersions of the above type are well known in the art. Examples of gelling polysaccharides used in such dispersions are: carrageenan, modified starches, alginate. It is also known in the art to use gelatin to gel the aqueous phase rather than a gelling polysaccharide. Gelatin, as compared to gelling polysaccharides, generally offers the advantage that it melts at mouth temperature and that dispersions containing said gelling agent readily release salt as well as water soluble flavour components. The use of gelling polysaccharides at above critical concentration level on the contrary produces a dispersion which breaks down in the mouth relatively slowly, i.e. does not quickly release salt and flavour compounds.

We have found now that a polysaccharide containing dispersion displaying essentially the same in-mouth break down behaviour as a gelatin based dispersion can be obtained by replacing gelatin by a gelling polysaccharide and further including a limited amount of protein and a viscosity enhancer. Accordingly the present invention is specifically concerned with a plastic dispersion containing from 5-65 wt.% a continuous fat phase and from 95-35 wt.% of a gelling polysaccharide containing dispersed aqueous phase, wherein the aqueous phase comprises one or more gelling polysaccharides at a concentration exceeding the critical concentration thereof, from 0.004 to 1.0 wt.% of protein, preferably other than gelatin, and a viscosity enhancer.

The replacement of gelatin by the present gelling system offers several advantages. The gelling polysaccharide, protein and viscosity enhancer can all be obtained from natural non-animal sources, as contrasted to gelatin which is extracted from pig skin. The latter explains why food products containing gelatin are unacceptable to large consumer groups such as vegetarians and people who only eat 'kosher' food.

The improved oral release observed for the present dispersion can suitably be demonstrated by recording the conductivity of the dispersion as a function of time in the mouth. The latter measurement can suitably be carried out by means of a dental plate provided with two electrodes. The test person is requested to masticate the product in order to mimic the in-mouth shear forces normally observed during consumption. When measuring the conductivity as a function of time in the mouth, generally a sigmoid curve is obtained, indicating that the conductivity rises with time. A product displaying a good oral response generally produces a relatively steep curve which arrives at its maximum quickly. Dispersions producing an adequate oral release generally reach 50% of the total conductivity increase within 30 seconds.

The synergistic interaction of gelling polysaccharide and protein can suitably be illustrated by measuring the conductivity as a function of time for the product containing gelling polysaccharide and the product containing gelling polysaccharide and protein. The introduction of protein at a concentration level in accordance with the present invention results in a substantially more rapid conductivity increase. The latter conductivity increase is believed to be closely correlated to for instance the increase in salt and flavour release. It is interesting to notice that the inclusion of protein in gelatin-based dispersions does not substantially improve the break-down characteristics thereof.

The inclusion of the viscosity enhancer was found to be very advantageous as a dispersion displaying excellent mouthfeel can thus be obtained. Examples of suitable viscosity enhancers are thickening agents, such as natural gums and non-gelling starches, and gelling agents applied below their critical concentration. According to a very preferred embodiment of the invention the viscosity enhancer is selected from the group consisting of guar gum, enzyme modified guar, maltodextrin, sodium alginate, xanthan gum, waxy starches (e.g. waxy rice starch), locust bean gum, tragacanth, pectin, cross-linked starches and mixtures thereof.

The critical concentration of a gelling agent is the concentration level at which said gelling agent will start to form a gel. The critical concentration of the gelling polysaccharide(s) in the aqueous phase composition of the plastic dispersion is determined in an aqueous system which has exactly the same composition as the aqueous phase composition to be incorporated into the present dispersion, on the understanding that the concentration of the gelling polysaccharide(s) has to be varied in order to establish the critical concentration thereof.

The critical concentration of a gelling polysaccharide or a mixture of gelling polysaccharides in a particular composition can be calculated from measurements of the shear modulus of a series of samples containing different concentrations of gelling polysaccharide or mixture of gelling polysaccharides, as described in Br. Polymer J. 17 (1985), 164. If the critical concentration of a combination of gelling polysaccharides is to be determined, then the critical concentration of such mixture of gelling polysaccharides is determined in a manner analogous to the procedure described above. The composition of the mixture of gelling polysaccharides is kept constant and the weight concentration of said mixture is varied as if it consisted of only one single gelling polysaccharide.

The critical concentration for gelling agents other than the gelling polysaccharide(s) present at above critical concentration is determined in essentially the same manner. In order to establish whether a gelling agent acts as a viscosity enhancer, the critical concentration for said gelling agent is measured in an aqueous phase system devoid of (other) gelling polysaccharides. It is to be understood, however, that the viscosity enhancer can suitably be a gelling polysaccharide which as such is present at a concentration below its critical concentration, but which in combination with another gelling polysaccharide is present at a concentration level exceeding the critical concentration of said combination.

The viscosity enhancer in the present dispersion is preferably present in an amount sufficient to raise the viscosity of the aqueous phase, in the absence of gelling agents, by at least 40 mPa.s at 35°C and 100 $s^{-1}$. More preferably the viscosity increase is in the range of 60-4000 mPa.s. The viscosity can suitably be measured using a Haake ™ viscometer.

Depending on the type of viscosity enhancer used, the adequate concentration level for said component can vary widely. Generally concentration levels in the range of 0.08 to 13.0% by weight of the aqueous phase are found suitable.

Although proteins of any source can suitably be used in the present dispersion, it is preferred that all gelatin be replaced, i.e. to have essentially no gelatin present. More preferably the protein in the present dispersion is selected from the group consisting of dairy protein, vegetable protein and mixtures thereof. According to another preferred embodiment of the invention protein is included at a concentration in the range of 0.005 to 0.5 wt.%.

The gelling polysaccharide(s) in the present dispersion are preferably selected from the group consisting of: kappa-carrageenan, iota-carrageenan, alginate, agar, gellan, pectin, gelling starch, microcrystalline cellulose and mixtures thereof. Here the term starch includes for instance native starches, cross-linked starches and hydrolyzed starches.

Examples of gelling agents which, in addition to the gelling polysaccharides, can suitably be included in the present dispersion are: gelatin, whey protein, sodium caseinate, bovine serum protein, soy protein and mixtures thereof. As observed hereinbefore the present dispersion preferably comprises protein selected from the group consisting of dairy protein, vegetable protein (e.g. soya protein) and mixtures thereof. Thus, preferably, also gelling protein, when present, is selected from this group. Gelling agents other than polysaccharides according to a very preferred embodiment of the invention, if present, are included at a concentration below the critical concentration of said gelling agents.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. Also digestible low calorie fatty materials having properties similar to triglycerides can suitably be used in the present invention. An example of such a low calorie fatty material is Simplesse ™, which is based on an aqueous dispersion of non-agglomorated denatured whey/egg protein macrocolloids. The term protein as used throughout this document does not encompass protein present in the form macrocolloids, although preferably the content of protein, including such macrocolloid proteins, is below 1.0 wt.%. The terms fat and oil are used interchangeably.

In this specification the term 'polyol' is intended to refer to any aliphatic or aromatic compound which comprises at least four free hydroxyl groups. Such polyols in particular include the group of sugar polyols, which comprises the sugars, i.e. the mono-, di-and oligosaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification the term 'polyol fatty acid polyester' is intended to refer to any such polyesters or mixtures thereof of which, on an average, more than 70 % of the polyol hydroxyl groups have been esterified with fatty acids. In this specification by 'indigestible' is meant that at least about 70 % by weight of the material concerned is not digested by the human body.

The fat phase of the present dispersion preferably contains a substantial amount of solid fat at 20°C, but only a very limited amount of solid fat at 35°C. The so called N-value of the fat phase is indicative of the solid fat content. The N-value for a fat at a certain temperature t is indicated as $N_t$ and indicates the equilibrium solid fat content of the composition at that temperature t, expressed in % of the weight of that composition. It can conveniently be measured by means of NMR, as described in Fette, Seifen, Anstrichmit- tel 80 (1978), 180-186. Preferably the $N_{20}$ of the present fat phase is in the range of 8-50%, whereas the $N_{35}$ ranges from 0-5%.

The benefits of the present invention are particularly appreciated in low fat spreads, i.e. spreads containing substantially less than the about 80% fat normally found in butter and margarine. The lower the fat content of the dispersion, the bigger the influence of the aqueous phase system becomes. Preferably the present dispersion contains less than 65 wt.% fat. Such dispersions of low fat content can suitably be divided into two classes: the low fat spreads containing from 28-65 wt.% fat and the very low fat spread containing from 5-28 wt.% fat.

As observed hereinbefore the present dispersion offers the advantage that a good oral response is obtained due to the fact that the combined utilization of gelling polysaccharide and protein results in a quick break down in the mouth. A measure for the quickness of break down is the time needed to achieve 50% of the total conductivity increase observed when measuring the conductivity as a function of time in the mouth, using the method described hereinbefore. Preferably, when measuring the conductivity of the dispersion as a function of time in the mouth, 50% of the conductivity increase is observed in 10-25 seconds.

Like gelatin the polysaccharide(s) used in accordance with the present invention can display gel melting behaviour, which gel melting behaviour can be similar to the gel melting behaviour of gelatin. By carefully tuning the cationic composition of the aqueous phase, for instance carrageenan can be made to melt below mouth temperature, i.e. below about 35°C.

We have found that the inclusion of protein even improves the oral response of dispersions which contain gelling polysaccharides which do not melt or which melt above 35°C. Accordingly, in a preferred embodiment the gelling polysaccharides in the present dispersion either do not melt, or alternatively melt above 35°C, more preferably above 50°C and most preferably above 65°C.

The invention is illustrated by means of the following examples:

Example 1

A 40% fat spread was prepared from an aqueous phase and fat phase of the following composition (in wt.%):

```
Fat phase
Fat blend       1                         99.0
Monoglycerides (Hymono 8903 TM)            0.5
Lecithin (Bolec ZTD TM)                    0.5
Beta carotene                             trace
Flavour                                   trace


Aqueous phase
Agar (1254 Gelidium TM)   2                0.8
Sodium caseinate                           0.1
Sodium alginate (Mannucol DM TM)           1.0
Sodium chloride                            1.5
Potassium sorbate                          0.15
Water                                     96.45
pH to 5.3 with lactic acid


1 Blend consisting of 80% sunflower oil and 20% palm
   soybean oil hardened to a slip melting point of 44°C

2 ex Branwell, United Kingdom
```

The fat phase and aqueous phase were separately prepared and maintained at 60°C in separate vessels. From these vessels both phases were fed to a sequence of apparatus at a throughput of 50 g/minute and combined therein in a weight ratio of fat phase to aqueous phase of 40:60.

The processing conditions applied were as follows:

| Unit | Jacket temperature (°C) | Rotation speed (rpm) |
|---|---|---|
| C-unit | 25 | 1000 |
| A-unit | 10 | 1000 |
| C-unit | 10 | 1400 |
| A-unit | 10 | 1000 |
| C-unit | 10 | 1000 |

As can be deduced from the above table both the C-units (crystallizers) and A-units (scraped surface heat exchangers) were provided with a cooling jacket.

The low fat spread obtained was found to have a good oral release. The oral release was very similar to that of a similar low fat spread containing 3% gelatin by weight of the aqueous phase. When the sodium caseinate is not included in the aqueous phase composition a low fat spread is obtained which displays a substantially worse oral release than the above product.

Also when the product containing sodium caseinate was compared with the protein free product after 30 seconds of mastication by viewing the masticated samples under a light microscope it was clear that the former product had broken down more completely than the protein free product.

Conductivity measurements and also the measurement of the average water droplet size by means of NMR unambiguously showed that the low fat spread was a water-in-oil dispersion.

Example 2

A 40% fat spread was prepared from an aqueous phase and fat phase having the same composition as given in Example 1, with the exception that instead of agar an identical amount of kappa-carrageenan was used.

The fat phase and aqueous phase were separately prepared and maintained at 60°C in separate vessels. The fat phase was subsequently fed through a C-unit and an A-unit, combined with the aqueous phase in another C-unit (ratio 40:60) and further processed through another A-unit followed by a last C-unit (throughput 50 g/min).

The processing conditions applied were as follows:

| Unit | Jacket temperature (°C) | Rotation speed (rpm) |
|---|---|---|
| C-unit | 20 | 1000 |
| A-unit | 5 | 1000 |
| C-unit | 10 | 1400 |
| A-unit | 10 | 1000 |
| C-unit | 10 | 1000 |

The product obtained was in all respects very similar to the product described in Example 1.

Conductivity measurements and also the measurement of the average water droplet size by means of NMR unambiguously showed that the low fat spread was a water-in-oil dispersion.

Example 3

A 40% fat spread was prepared from an aqueous phase and fat phase of the following composition (in wt.%):

```
Fat phase
Fat blend of Example 1                    99.5
Monoglycerides (Hymono 8903 TM)            0.5
Beta carotene                            trace
Flavour                                  trace


Aq
ueous phase
Iota carrageenan 1                         0.8
Sodium caseinate                           0.2
Sodium alginate  2                         0.8
Buttermilk powder                          1.67
Sodium chloride                            1.67
Potassium sorbate                          0.17
Water                                     94.7
pH to 5.0 with lactic acid (27%)

1 Genuvisco J TM
2 Mannucol DH TM
```

The aqueous phase and fat phase were mixed to form a premix which was held at 50-55°C, fed (at a throughput of 2.5 tons/hr) to a production line consisting of two A-units followed by a C-unit and another A-unit and filled into tubs. The A-units were operated at 700 rpm and the C-unit at 600 rpm. After the second A-unit the temperature of the emulsion was 12°C; at filling the emulsion temperature was 15°C.

The product so obtained was found to be easy spreadable, was quick melting and did not loose water on spreading.

Example 4

Example 3 was repeated with the exception that the aqueous phase, in addition, contained 5 wt.% Paselli SA2 TM maltodextrin. The product obtained was also easy spreadable and stable, but was found to have an improved mouthfeel, giving a slightly more rounded and less quick sensation.

**Claims**

1. Plastic dispersion containing from 5-65 wt.% of a continuous fat phase and from 95-35 wt.% of a gelling polysaccharide containing dispersed aqueous phase, wherein the aqueous phase comprises one or more gelling polysaccharides at a concentration exceeding the critical concentration thereof, from 0.004 to 1.0 wt.% of protein and a viscosity enhancer.

2. Dispersion according to claim 1, wherein the aqueous phase comprises 0.004 to 1.0 wt.% of protein other than gelatin.

3. Dispersion according to claim 2, wherein the protein is selected from the group consisting of dairy protein, vegetable protein and mixtures thereof.

4. Dispersion according to any one of claims 1-3, wherein the viscosity enhancer is present in an amount sufficient to raise the viscosity of the aqueous phase, in the absence of gelling agents, by at least 40 mPa.s at 35°C and 100 s$^{-1}$.

5. Dispersion according to any one of claims 1-4, wherein the viscosity enhancer is selected from the group of thickening agents, gelling agents below their critical concentration and mixtures thereof.

6. Dispersion according to any one of claims 1-5, wherein the viscosity enhancer is selected from the group consisting of guar gum, enzyme modified guar, maltodextrin, sodium alginate, xanthan gum, waxy starches (e.g. waxy rice starch), locust bean gum, tragacanth, pectin and cross-linked starches and mixtures thereof.

7.  Dispersion according to any one of claims 1-6, wherein the gelling polysaccharide is selected from the group consisting of kappa-carrageenan, iota-carrageenan, alginate, agar, gellan, pectin, gelling starch, microcrystalline cellulose and mixtures thereof.

8.  Dispersion according to any one of claims 1-7, wherein the dispersion comprises 28-65 wt.% fat.

9.  Dispersion according to any one of claims 1-7, wherein the dispersion comprises 5-28 wt.% fat.

10. Dispersion according to any one of claims 1-9, wherein, when measuring the conductivity of the dispersion as a function of time in the mouth, 50% of the conductivity increase is observed in 10-25 seconds.

European Patent Office

**EUROPEAN SEARCH REPORT**

Application Number

**EP 90 30 9790**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 237 120 (UNILEVER)<br>* claims 1, 8, 10-18 * * page 2, lines 41 - 46 * * page 3, lines 40 - 43 * * page 3, line 50 - page 4, line 39 * * examples 4, 7 *<br>– – – | 1-3,5-9 | A 23 D 7/00 |
| Y | RESEARCH DISCLOSURE no. 302, June 1989, New York, USA pages 458 - 460; Abstract No.30292; "20-25% Fat Spread"<br>* example 2 *<br>– – – | 1-3,5-9 | |
| A | EP-A-0 293 980 (UNILEVER)<br>* claims 1-3, 6, 7 * * page 5, lines 28 - 36 *<br>– – – | 1-3,5-9 | |
| A | EP-A-0 372 625 (UNILEVER)<br>* claims 1-3, 6 * * page 1, line 30 - page 2, line 16 * * page 2, lines 39 - 49 *<br>– – – | 1,2,7 | |
| A | EP-A-0 271 132 (UNILEVER)<br>* claims 1, 9, 16-18 * * page 12, lines 28 - 37 * * example 3 *<br>– – – | 1-3,5-9 | |
| A | GB-A-2 084 171 (UNILEVER)<br>* claim 1 * * page 1, lines 1 - 20 * * page 1, lines 79 - 96 * * example *<br>– – – | 1-3,5-9 | **TECHNICAL FIELDS SEARCHED (Int. Cl.5)** |
| A | US-A-4 400 405 (R.G.MORLEY)<br>* claims 1, 3, 4 * * column 7, line 34 - column 8, line 7 *<br>– – – – – | 1,6,7 | A 23 D |

The present search report has been drawn up for all claims

| Place of search | Date of completion of search | Examiner |
|---|---|---|
| The Hague | 19 April 91 | VUILLAMY V.M.L. |